Europäisches Patentamt

European Patent Office

Office européen des brevets

(11) Publication number: **0 083 162**
**B1**

## EUROPEAN PATENT SPECIFICATION

(45) Date of publication of patent specification: **07.09.88**

(51) Int. Cl.⁴: **G 01 P 5/00**, G 01 N 21/64, G 01 S 17/58

(21) Application number: **82306478.7**

(22) Date of filing: **06.12.82**

(54) Optical air data measurement system.

(30) Priority: 08.12.81 US 328721
08.12.81 US 328476
22.03.82 US 360500

(43) Date of publication of application:
06.07.83 Bulletin 83/27

(45) Publication of the grant of the patent:
07.09.88 Bulletin 88/36

(84) Designated Contracting States:
DE FR GB NL

(56) References cited:
EP-A-0 009 533
FR-A-2 154 376
US-A-3 334 235
US-A-3 612 859
US-A-4 148 585

MESSEN UND PRÜFEN, no. 10, October 1980,
Woerishofen C. RÜCKAUER "Laser-Doppler-
Anemometer", pages 672-676, 683

(73) Proprietor: Lockheed Corporation
2555, North Hollywood Way
Burbank California 91520 (US)

(72) Inventor: Rogers, Philip Louis
12944 Winthrop Avenue
Granada Hills California 91344 (US)

(74) Representative: Boon, Graham Anthony et al
Elkington and Fife High Hoborn House
52/54 High Holborn
London, WC1V 6SH (GB)

(56) References cited:
REVIEW OF SCIENTIFIC INSTRUMENTS, vol.
44, no. 9, September 1973, New York F.L.
CROSSWY et al. "Signal conditioning
electronics for a laser vector velocimeter",
pages 1324-1332
LASER UND ELEKTRO-OPTIK, vol. 12, no. 3,
September 1980 Stuttgart U. BRINKMANN et
al. "Diagnostik gasdynamischer Strahlen mit
laserinduzierter Fl oreszenz: lokale
Geschwindigkeits-, Dichte- und
Temperaturprofile", pages 36-39

Courier Press, Leamington Spa, England.

## Description

The invention relates to an apparatus for measuring the velocity of a moving body.

It has long been conventional to measure the relative air speed between a moving body, such as an aircraft, and the free airstream through which the aircraft is flying by means of a mechanical instrument which in effect compares the kinetic pressure exerted by the moving airstream onto a first defined area facing said airstream with respect to the static pressure exerted on a second defined area generally perpendicular to said first defined area. Typically, such a prior art system employs Pitot tubes, pneumatic tubing and pressure transducers which are exposed to the external environment and subject to not only degraded performance caused by calibration changes, but also catastrophic failures as a result of accidental breakage. Furthermore, such a prior art type of air speed measurement device physically protrudes into the airflow, with a resultant drag penalty.

The atmosphere contains many naturally occurring aerosols having a diameter on the order of from 0.1 to 10 micrometers. Examples of such aerosols are pollen and dust that naturally occur in the atmosphere. These aerosols tends to follow the motion of the atmosphere in which they are entrained and hence by observing the motion of such particles, it is possible to measure the velocity of the surrounding airstream.

Accordingly, optical techniques have also been utilized to measure wind. One such technique employed scattered sunlight as a source and cross-correlated the outputs of two radiometers having intersecting fields of view. Against localized flumes, such as the flume from a smokestack, it produced satisfactory results. A more sophisticated type of optical device measure the Doppler shift in light scattered by particles within the moving fluid to measure velocity along the system's optical axis.

There has also been used a so-called fringe laser velocimeter which measured a velocity component transverse to the instrument's line of sight by detecting the movement of aerosol particles through a layered pattern of interference fringes created by two intersecting beams of coherent laser light. Such a device has proven particularly accurate at relatively close ranges.

US—A—4148585 describes velocimeter for measuring the three-dimensional velocity of a fluid by measuring the velocity of particles carried thereby. The apparatus described comprises first means (a laser) emitting radiation: second means (comprising lenses) for projecting the radiation onto a detection volume through which the fluid flows and for producing in the detection volume three sets of non-orthogonal, but linearly independent, three-dimensional patterns of radiation, each of the sets having a normal vector which has a significant component in the direction of the main axis of the apparatus as well as a transverse component at right angles thereto; third means (a lens) for focussing radiation scattered by the particles as it passes through the detection volume onto a detection area; fourth means (a photomultiplier) disposed to measure the intensity of the scattered radiation; and further means (not described in detail) responsive to the output of the fourth means for calculating the velocity of the particles relative to the apparatus. The apparatus described in US—A—4148585 uses forward scattering and is designed for use in a situation where the apparatus is stationary and the fluid carrying the particles is moving. It is therefore unsuitable for use in measuring the air speed of a moving body such as an aircraft. Furthermore, the three sets of patterns of radiation cannot be generated simultaneously, and it is necessary to change a mask in order to complete the generation of all three sets. Although reference is made therein to the possibility of measuring all three components of velocity simultaneously using two diffraction gratings, no further details are given.

An article by Sato and Sasuki in Applied Optics, Vol. 17, No. 24, 15 December 1978, describes a velocimeter which has similarities to that described in US—A4148585. Although, unlike US—A—4148585, this does simultaneously generate all three sets of patterns of radiation. Only one of the associated vectors has a significant component in the direction of the main axis of the apparatus.

An article by Yanta in ICASF 1979 Record 297—301 describes another velocimeter which has similarities to that described in US—A—4148585. Like the Sato and Sasuki apparatus this simultaneously generates all three sets of patterns of radiation. However, the patterns are not all non-orthogonal with respect to another and only one of the associated vectors has a significant component in the direction of the main axis of the apparatus.

The article by Crosswy and Hornkohl in Rev. Sci. Instrum., Vol. 44, No. 9, September 1973 describes a velocimeter which also has similarities to that described in US—A—4148585. Unlike US—A—4148585 the apparatus described in this article uses forward scattering rather than backscattering, thus removing one obstacle to using it to determine the air velocity of a moving body such as an aircraft. However, the basic system described generates two sets of patterns of radiation which are orthogonal to one another and neither of which has an associated vector with any component in the direction of the main axis of the apparatus. To measure velocity along this axis $\alpha$ is proposed in the article to use a second transmitter, which is the only one to yield any information as to the velocity along this axis.

EP—A—009533 describes a velocimeter which is intended to measure the air speed of an aircraft. However, this is of a fundamentally different type in that it does not use three-dimensional patterns of radiation. Instead it relies on the frequency shift in the radiation backscattered when a laser beam is incident on a moving particle. A comparison is made electronically between the frequency of electrical signals representing the backscattered radiation and the incident radiation respectively.

Another optical technique relied upon variations in refractive index moving with the wind across the line of sight of the instrument, detecting such variation by means of a so-called double-ended system having separated source and receiver.

One theoretical way of measuring relative wind speeds in three dimensions, would theoretically be to provide three separate systems with mutually orthogonal axes aimed at a common region of space. In practice, such an arrangement is extremely difficult to maintain in alignment and expensive to implement.

It has been proposed to utilize simultaneously two dominant colors from a single laser to form two mutually orthogonal sets of fringe planes in a common detection volume but, nevertheless, readily distinguishable from each other so that it would be possible to measure two orthogonal velocity components in the plane transverse to the velocimeter's optical axis. Alternatively, polarization or modulation by means of acousto-optic modulators may be utilized to distinguish the signals corresponding to the two components. It has also been proposed to combine two different types of velocimeters in the same system, so that two orthogonal velocity components may be measured simultaneously, one parallel to the system's main axis (by the Doppler method), and one, at right angles thereto (using the fringe method); by also using the above-mentioned two component techniques it would thus also theoretically be possible to measure simultaneously three orthogonal velocity components (one by the Doppler method, two with the fringe method).

According to the present invention there is provided an apparatus for measuring the three-dimensional velocity of a remotely located object, comprising: first means emitting radiation; second means associated with said first means for projecting said radiation onto a detection volume physically separated in space from said apparatus for producing simultaneously in said detection volume three sets of non-orthogonal, but linearly independent, three-dimensional patterns of radiation, each of said sets having its own distinguishing characteristic and each of said sets having a normal vector which has a significant component in the direction of the main axis of the apparatus as well as a transverse component at right angles thereto; third means associated with said second means for focussing radiation backscattered by said object as it passes through said detection volume onto a detection area contained within said apparatus; fourth means disposed to measure the intensity of said scattered radiation; fifth means responsive to the output of said fourth means and capable of utilizing said distinguishable characteristic for identifying three separate components of said scattered radiation associated respectively with each of said three sets of radiation patterns; and sixth means responsive to the output of said fifth means for calculating the velocity of said object relative to said apparatus, at least said first, second, third and fourth means are located in physical proximity to one another, whereby they may all be contained within a single, relatively compact, housing, aboard a moving body, whereby the velocity measured is the velocity of the moving body relative to said object.

A considerable improvement in signal-to-noise ratio that results from utilizing a single transmit/receive lens window to focus on a single detection volume containing three sets of fringe planes oriented with respect to one another such that no two of their three respective normal vectors are either coplanar or orthogonal with respect to each other while at the same time each of the three normal vectors has a significant component in the direction of the system's main axis as well as a transverse component at right angles thereto.

The invention provides an apparatus by means of which air data measurements that are critical to the operation of an aircraft (such as true air speed, side slip and angle of attack) can be simply and reliably measured by means of an accurate and reliable measurement device free of any Pitot tubes, pressure ports or protrusions into the airstream. Such measurements can be made at a sample location at a sufficient distance from the aircraft or any physical attachments thereto that the measurement will not be subject to systemic errors of a sort that cannot always be fully compensated for such as those caused by air compression effects and airflow disturbances. A divisional application has been published under Publication No. 0 227 911 on 08.07.87.

In an embodiment of the invention the velocimeter described above is combined with an apparatus for inducing fluorescence in selected air molecules and thereby determining air density related parameters, for example air pressure or barometric altitude.

The combined system contains a laser or other suitable radiation source (or sources) as well as an optical arrangement for transmitting the radiation from the laser to a sample volume in order both to form linearly independent sets of radiation fringes at the sample location as well as to focus the radiation at the sample location so as to cause selected air molecules to fluoresce. The device also contains an optical receiving arrangement for focusing backscattered radiation and fluorescent emissions from the sample volume onto one or more photodetectors.

In one preferred embodiment, the radiation that forms the pattern of fringes originates from a single laser having an output spectral content that results not only in a significant portion of the radiation being backscattered by the type of aerosol particles that will normally be encountered at the opertional altitudes of the aircraft but which will also result in substantial fluorescence of particular molecules which comprise a known percentage of the earth's atmosphere of which Nitrogen ($N_2$) is the most prevalent.

In a second embodiment, two radiation sources are provided and the spectral content of the radiation used to create the fringe patterns is different from that used to fluoresce the air molecules. However, by the use of dichroic beam splitters or the like, both sources of radiation may be caused to propagate along a common optical path leading to the same sample volume in the external free airstream, thus permitting common receiving optical elements to function as part of both subsystems.

Whether or not the same radiation source is used both to create the radiation fringes and to fluoresce the air molecules, the resultant backscattered radiation containing the velocity information may differ in spectral content from the fluorescent emissions containing the density (pressure) information. In that case, two separate photodetectors may be each provided with a suitable optical filter such that the output of one photodetector is indicative of the present intensity of the fluorescence of the selected air molecules (and thus of air pressure and density) and the output of the other photodetector is indicative of the changing intensity of the backscattered radiation caused by the movement of aerosol particles relative to the sample volume (and thus of air speed, etc.).

By using a radiation source (such as a Q-switched laser) that can be quickly switched between an on state and off state, it is possible to utilize a single photodetector that is responsive both to backscattered radiation and to fluorescent re-emissions, since the backscattered radiation will cease as soon as the radiation is turned off, but the fluorescent emissions will decay exponentially.

In the accompanying drawings:

Fig. 1 shows a representative device constructed in accordance with the present invention conformally mounted inside a modern aircraft. It also shows the relationship of the air sample whose velocity and density is being measured with respect to the supersonic shock wave and skin compression effects in the vicinity of the device;

Fig. 2 is a graph showing the exponential manner in which the intensity of the fluorescent emissions will decay following the interruption of the radiation which causes the fluorescence;

Fig. 3 is an exploded isometric schematic diagram showing the major components of a first embodiment of an optical air data measurement system constructed in accordance with the present invention and their relationships to one another and with respect to the location of the air sample region at which the measurements are to be made;

Fig. 4 is an enlarged cross-sectional view through the sample volume shown in Fig. 3, showing the formation of radiation fringes as a result of two intersecting beams of coherent light;

Fig. 5 is a graph showing variations in intensity of backscattered radiation resulting from the relative movement between the radiation fringes and the aerosol particles within the sample region;

Fig. 6 is a timing diagram showing how the radiation source may be periodically interrupted to facilitate fluorescent measurements;

Fig. 7 is a block schematic diagram illustrating how the output of a single photodetector may be processed to provide air speed, angle of attack, side slip and altitude information.

Fig. 8 shows an alternative embodiment generally similar to that of Fig. 3, but employing more than one radiation source and more than one photodetector;

Fig. 9 shows a second alternative embodiment generally similar to that of Figs. 3 and 8 in which a plurality of optical pathways is provided from the radiation source to the sample volume for the purpose of creating radiation fringes, but only a single optical pathway is provided between the radiation source and the sample volume for the purpose of inducing fluorescence.

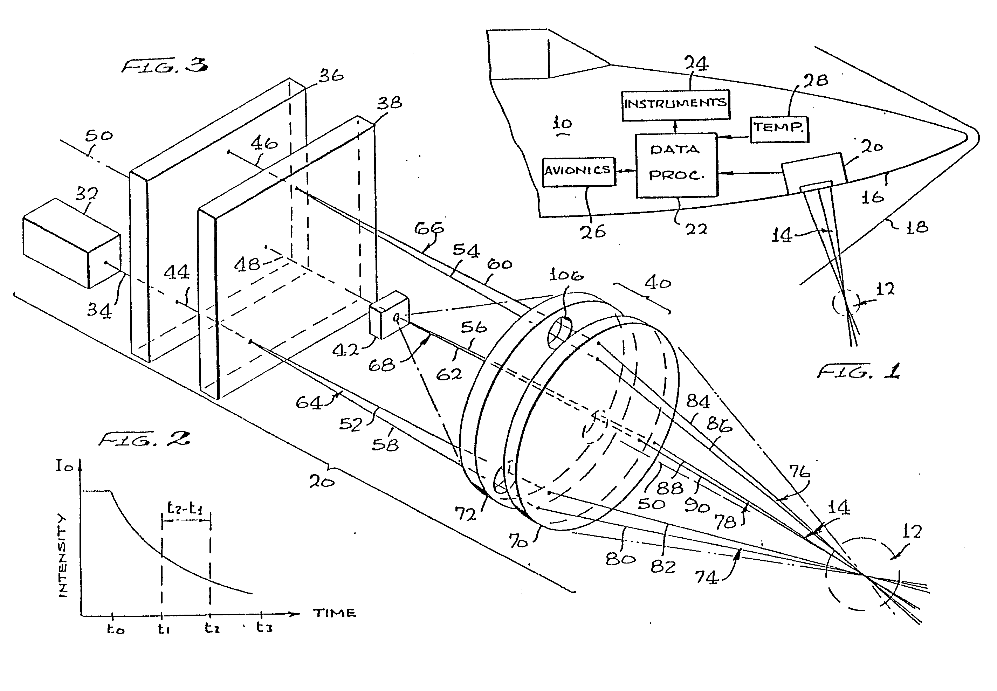

Referring now to Fig. 1, it will be seen that this Figure reflects an exemplary embodiment of the present invention installed aboard a supersonic aircraft (10). A sample volume (12) is defined by the intersection of the laser beams (14) at the focal point of the transmitting optical subsystem, and is located at some distance removed from the nearest surface (16) of the aircraft (10) such that the sample volume (12) is in fact located in a portion of the airstream undisturbed by the supersonic shock wave (18).

In Fig. 1, it will also be seen that ouptut of the receiving optical subsystem (20) is preferably conditioned by a data processor (22) prior to display by the instrumentation system (24) and utilization by the aircraft's avionics (26). The data processor (22) also has, as another input, a temperature signal provided by a conventional temperature sensing subsystem (28). (A value for temperature is required to derive the pressure of a gas from its density).

The system in effect uses changes in induced fluorescence to measure optically the density of the air mass and changes in the backscattered radiation as the scattering particle moves relative to interference fringes to measure optically the velocity of the air.

Air density (D) combined with static temperature ($T_s$) can be used to determine pressure altitude ($P_s$):

$$P_s = D \cdot R \cdot T_s$$

where R is the ideal gas constant. Static temperature ($T_s$) is related to total temperature ($T_t$) and Mach number (M) as follows:

$$T_s = T_t \cdot (1 + .2M^2)^{-1}$$

For an energy source that is interrupted at regular intervals (which is normally preferred), the fluorescent light intensity decays exponentially, and if the intensity is measured at two different times, $t_1$ and $t_2$, the decay is expressed by:

$$\frac{I_2}{I_1}=e^{-(t_2-t_1)/L}$$

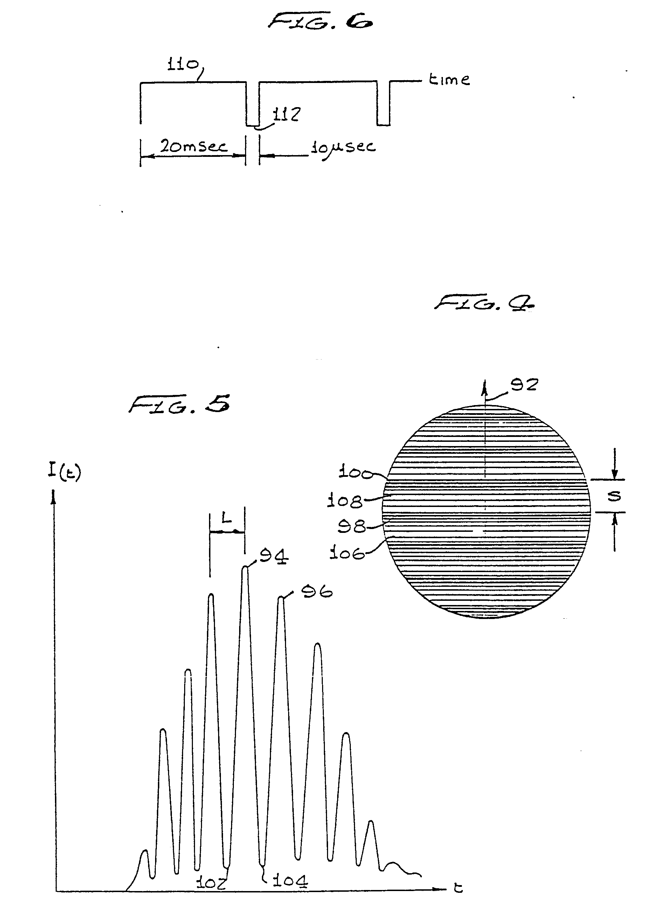

where L is the mean fluorescence lifetime, and is related to the mean molecular collision time and hence to the density of the gas. Fig. 2 illustrates graphically such an exponential relationship between Intensity (I) and Time (t) in which it can be seen that at equally spaced intervals of time (e.g., "$(t_1-t_2)$") following the interruption of the energy source at time $t_0$, the intensity is successively reduced by a constant factor.

This is explainable by considering a fluorescence quenching mechanism; e.g., the Stern-Volmer mechanism. Consider a case in which a molecule M is excited, by a radiation source, to a state M*. Assume that fluorescence, collisional deactivation by M or some other molecule A, and photodecomposition are the only processes by which M* can relax. These processes can be expressed by:

$$M^* \overset{(k_1)}{\underset{\rightarrow}{\longrightarrow}} h+M$$

$$M^*+M \text{ (or A)} \overset{(k_2)}{\underset{\rightarrow}{\longrightarrow}} M+M' \text{ (or A')}$$

$$M^* \overset{(k_3)}{\underset{\rightarrow}{\longrightarrow}} B+C$$

where $k_1$, $k_2$ and $k_3$ are reaction rate constants for the indicated processes; the lifetime L is related to these rate constants.

In the atmospheric measurement case, the third process, photodecomposition, is probably not important.

The collision rate constant is merely the mean collision rate between the excited molecule and all other molecules present. Computing the collision cross section for a molecule M colliding with another molecule (either M or A), it can be shown that the collision rate is given by:

$$Z_{MA}=\frac{n_M \cdot n_A}{Y} \cdot (d_{MA})^2 \left( \frac{8 \cdot \pi \cdot k \cdot T}{m^*_{MA}} \right)^{1/2}$$

where $n_M$, $n_A$ are the number densities of species M and A respectively, $d_{MA}$ is the average diameter of molecules M and A, k is the Boltzmann constant, T the absolute temperature, $m^*_{MA}$ is the reduced mass of molecules M and A, and Y is a symmetry factor that is 1 for $M \neq A$ and 2 for $M=A$. By multiplying and dividing by the masses of M and A, the number densities can be converted into mass densities, the quantities of interest.

Hence, by measuring the intensity of the emitted light at two different times, the mean fluorescence lifetime can be determined and the density can then be computed from the relation between mean lifetime and the collision rate calculated above.

The above-described technique has several advantages, including sensitivity to even short-lived fluorescence at low altitudes (high density, pressure), and freedom from calibration of the photodetector for absolute intensity measurement, since only relative intensity is used.

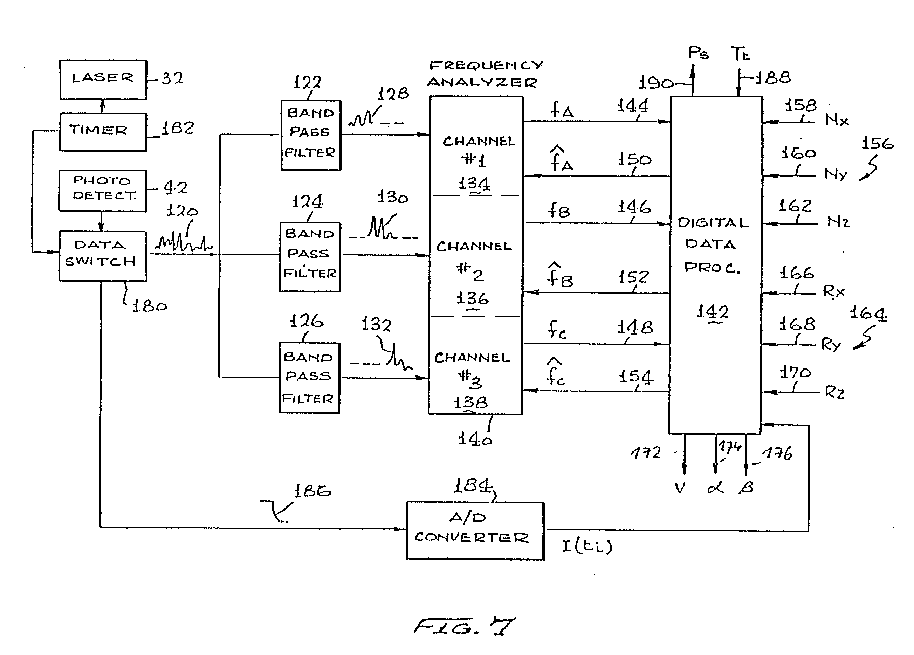

Referring now to Fig. 3, there is shown a first embodiment of the optical subsystem (20) of the present invention. It comprises a high intensity light source (32) of coherent monofrequency radiation (e.g., a primary light beam (34) produced by a laser operated in single-line mode), a beam splitting device (36) for generating a first plurality of radiation beams, a modulating device (38) for generating from said first plurality of beams a second plurality of beams each having a distinguishing characteristic, a focussing device in the form of a transmit/receive window lens (40) for forming three separately identifiable three sets of non-orthogonal, but linearly independent, three-dimensional patterns of fringe planes, and a detector device (42).

The primary light beam (34), which in the case of the illustrated embodiment may be a coherent monofrequency light beam generated by the laser (32), is split such that approximately thirty percent of the beam is transmitted as a first secondary beam (44), thirty-five percent is transmitted as a second secondary beam (46), and thirty-five percent as a third secondary beam (48). The secondary beams (44, 46, 48) are thus of substantially equal intensity and are arranged more or less parallel to one another and spaced at approximately equal angular intervals about, and at approximately equal radial distances from, a central axis (50). The secondary beams (44, 46, 48) impinge on a modulating array of acousto-optic cells (38) at so-called "Bragg angles" $\hat{B}$ determined in accordance with the equation

$$\hat{B}=\sin^{-1}(\lambda/2S)$$

where $\lambda$ is the wavelength of the entry beam and S is the wavelength of the acoustic waves within the cell. As the first, second and third secondary light beams (44, 46, 48) of the illustrated embodiment originate from a common source and thus all have the same frequency and wavelength, it will be seen that the Bragg angle associated with each of the acousto-optic modulating cells will depend only upon the particular respective modulating frequency chosen. The acoustic waves in the deflection medium inside each of the cells effectively set up a phase diffraction grating moving with the velocity of sound within the medium and having a grating spacing equal to the sound wavelength. Since the incoming beam enters the cell at the Bragg angle, a substantial percentage of the beam is diffracted from the exit side of the cell in a first order diffracted beam that is deflected from the incident light beam by an angle $-2\hat{B}$. This deflected beam is subjected to a slight frequency displacement $\Delta f$ as a result of a Doppler effect occasioned by the movement relative to the moving acoustic wave front; the deflected beam is also phase modulated in accordance with the frequency and amplitude of the sound wave. "Bragg diffraction" is discussed in further detail in an article entitled "Elasto-Optic Light Modulation and Deflection" by E. K. Sittig appearing at pages 229 et seq. of Progress in Optics, Vol. 9, published in 1952 by North-Holland Publishing Company-Amsterdam, which discussion is incorporated herein by reference. Each of the three cells is driven at a different characteristic frequency; accordingly, each cell has its own individual Bragg angle $(\hat{B}, \hat{B}', \hat{B}'')$ at which the incoming light beam should enter. As shown in Fig. 3, in addition to the three diffracted beams (52, 54, 56) exiting from the three respective Bragg cells, three respective undeflected beams (58, 60, 62) are also present. These three undeflected beams represent the portion of the respective incoming beams (44, 46, 48) that were not diffracted (and modulated in frequency and phase) by the corresponding respective Bragg cells.

Thus, it will be seen that there is produced three beam pairs (64, 66, 68), each pair having a substantially unshifted beam (58, 60, 62) (i.e., a zero order diffraction) and a modulated beam (52, 54, 56) (the above-mentioned deflected beams).

The plane containing the two diverging beams (56, 62) of third beam pair (68) is oriented vertically (i.e., in the X—Z plane). The planes containing the first pair of beams (52, 58) and the second pair of beams (54, 60) subtend angles of $-120°$ and $+120°$, respectively, with respect to the vertical (X—Y) plane.

It will be appreciated that the individual beams could be modulated in a similar fashion by means of rotating diffraction gratings or the like. However, it should be understood that acousto-optic cells are normally preferable since they are more compact and require a minimum of maintenance.

The window lens (40) as shown in the particular embodiment of Fig. 3 comprises a front lens element (70) and a rear lens element (72); the output beam (14) comprises a first converging beam pair (74), a second converging beam pair (76) and a third converging beam pair (78). The first converging beam pair (74) is in fact comprised of a first outer beam (80) corresponding to the undeflected input beam (58) and a first inner beam (82) corresponding to the deflected beam (52) of the first input beam pair (64). The inner beam (82) and the outer beam (84) in fact are both directed toward the central axis (50) of the window lens (40) so that all three converging beam pairs (74, 76, 78) will all converge within the same sample region (12). In similar fashion the second converging output beam pair (76) consists of a second outer beam (84) and a second inner beam (86) corresponding respectively to beams (60, 54) of the second diverging beam pair (66), while the third converging beam pair (78) consists of a third outer beam (88) and a third inner beam (90) corresponding to diverging beams (62, 56).

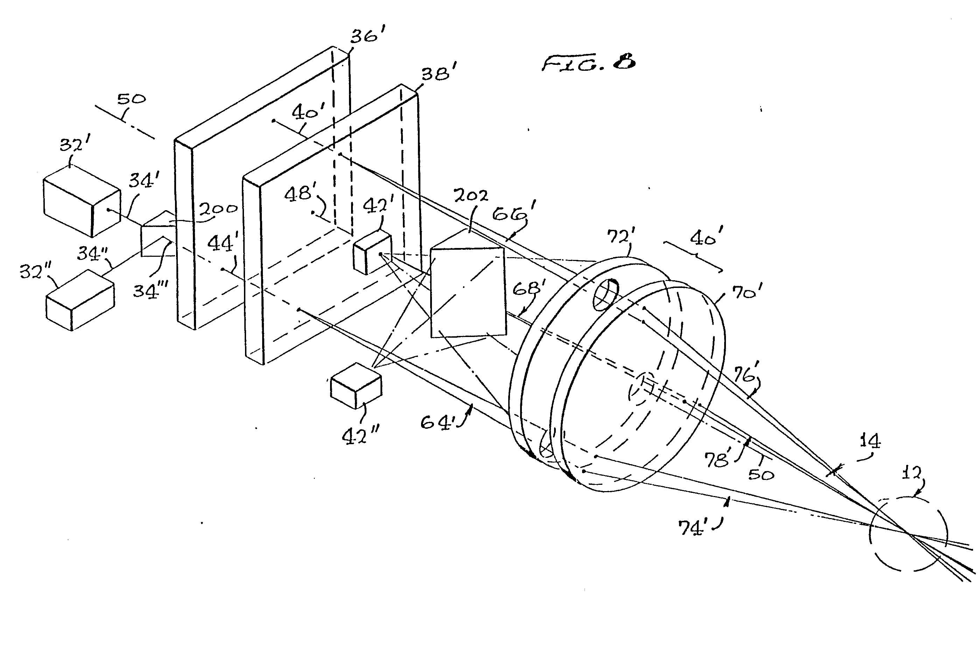

When each converging beam pair (74, 76, 78) of the laser output beams (14) is focussed at the detection volume (12), it forms a three-dimensional optical fringe pattern in the detection volume as a result of interference between the respective wave fronts. Fig. 4 is an enlarged cross-sectional view of one set of moving fringe patterns formed by the intersection of two beams of a convergent pair (e.g., beams (80, 82) of the first converging pair (74)). Each bright or dark fringe may be said to occur in a respective bright or dark fringe plane perpendicular to the plane containing the two intersecting beams and generally parallel to the bisector of the angle of intersection of the beam pair, the orientation of the fringe planes within such a fringe pattern being defined by a so-called fringe plane normal vector (e.g., vector (92)) disposed perpendicular to the fringe planes. Accordingly, the three beam pairs (74, 76, 78) form three such sets of overlapping three-dimensional fringe patterns, each having its own normal vector.

The attitude or position of the three bisectors and of the three planes respectively, containing the three beam pairs are selected such that the three corresponding fringe normal vectors (e.g., vector (92)) are disposed non-orthogonal with respect to each other and are linearly independent of one another (i.e., all three normal vectors do not lie on a common plane). Accordingly, when a small physical object (such as a particle of dust or similar aerosol) traverses the three sets of fringe patterns formed by the three beam pairs, a velocity component of the object may be measured in the direction of each of the three fringe normal vectors providing a set of three (non-orthogonal) velocity components in three dimensions. Thus, the velocity component produced by each beam pair may be measured perpendicular to the bisector of the angle subtended by, and in the plane containing, the beams of the pair (i.e., measured along the normal to the interference pattern fringe planes formed by that beam pair).

More particularly, as the aerosol particle traverses the bright and dark fringes of each of the three sets of fringe patterns, the coherent radiation from the laser (32) is scattered by the entity with an amplitude that depends on the location of the entity relative to the nearest bright fringe. As shown in Fig. 3, the scattered light is refocussed by the whole of the window lens (40) (except for the segments (106)) onto the photodetector (42). In response to the refocussed light, the detector (42) provides a processor with a composite output signal representing all three non-orthogonal components of the velocity of the entity through the fringes. The processor then separates the signal into the three linearly independent, non-orthogonal velocity components corresponding to the three normal vectors, and then transforms these individual non-orthogonal velocity components to measurements in a desired orthogonal frame of reference.

At this point it may be noted that the illustrated device will function even if the three sets of fringe patterns associated respectively with the three beam pairs (74, 76, 78) do not actually overlap but are merely located in the same general spatial volume so that the window lens (40) may still gather light from all three sets of fringe patterns onto a single detector (42). However, when all three sets of fringe patterns overlap one another, there is a greater probability of measuring all three linearly independent components of the velocity of a single aerosol particle, since any particle having an effective cross section larger than the wavelength of the incident radiation will scatter at least some light back to the detector (42) from each of the three sets of fringe patterns.

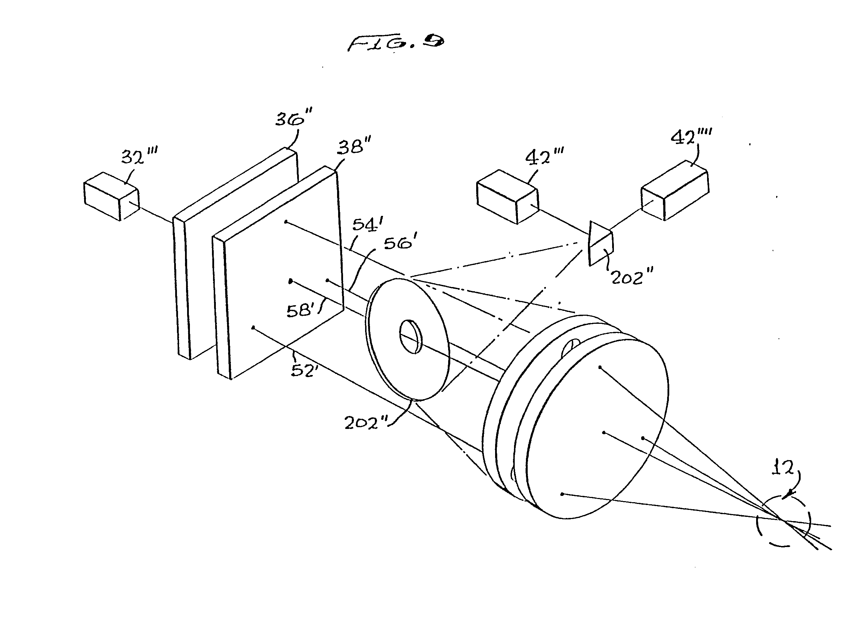

A typical variation in magnitude of scatter intensity as an aerosol particle moves relative to such layers of bright and dark fringe planes is shown in Fig. 5. Peaks (94, 96) correspond to maximum scatter at the central bright fringe regions (98, 100) (Fig. 4) and the troughs (102, 104) (Fig. 5) correspond to substantially no scatter at the corresponding dark fringe regions (106, 108) (Fig. 4).

The optical system (20) of the three-dimensional fringe velocimeter subsystem components may also function as the optical subsystem of a fluorescent air data measurement subsystem arranged coaxially therewith. The propagation of energy from the fluorescent air data measurement subsystem to the sample region (12) is switched on and off (preferably by means of an internal Q-switch associated with the laser (32)) in accordance with the timing diagram of Fig. 6. The laser (32) is preferably a continuous wave type of laser that may be operated at a relatively high duty factor—as indicated in Fig. 6, a 20 millisecond "On" (110) followed by a 10 microsecond "Off" (112). Thus, for at least 99.95% of the time, the optical subsystem (20) may be generating the three sets of non-orthogonal linearly independent moving interference fringe planes in accordance with the requirements of the velocity measuring subsystem. The remaining .05% or less of the time, the radiation source (32) is switched off and the photodetector (42) measures only the exponential decay of the fluorescent emissions originating from the sample region (12). The radiation source for inducing the fluorescence originates with the laser (32) which, as noted previously, has an output in the form of a beam (34) that is split into three secondary beams (44, 46, 48) which are modulated to form three beam pairs (54, 56, 58) resulting in a total of six individual beams which are all focussed by front lens (70) onto sample region (12). By using a laser having an optical spectrum that will induce selected air molecules (for example, Nitrogen ($N_2$) molecules) to fluoresce, the output of the photodetector (42) which has its field of view concentrated on sample region (12) will be a function of the intensity of the fluorescence. It should be noted that the velocimeter function of the apparatus is dependent only upon the frequency with which the amplitude of the output from the photodetector (42) is modulated. The fact that a constant fluorescence phenomenon is occurring in the same region of space at which the aerosol particles are crossing from a dark interference fringe plane to a bright interference fringe plane or vice versa will only serve to provide a constant bias to the amplitude of the photodetector's output and will not affect the frequency spectrum from which the velocity measuring subsystem extracts the velocity data.

The fluorescent re-emissions radiating from the sample region (12) towards the window lens (40) are focussed by the combination of the front lens (70) and the rear lens (72) onto the photodetector (42).

By appropriate choice of the frequency of the light emitted by the laser (32), it is possible to cause only one particular molecular species within the atmosphere to fluoresce with sufficient intensity for such fluorescence to affect the output of the detector (42). Thus, if the molecular species of interest is Nitrogen ($N_2$) (and in that regard, it should be remarked that the proportion of $N_2$ within the atmosphere is relatively constant, at least at the elevations at which aircraft are normally operated, and therefore the density of $N_2$ within a given sample of atmospheric air will be a reliable indication of the air pressure and barometric altitude in the vicinity of the sample), then the $N_2$ molecules in the sample region, rather than other species not of interest, may be caused to fluoresce by means of, for example, an $N_2$ laser.

It should be emphasized that although a window lens (40) is shown as being the means for projecting the six laser radiation beams and three sets of interference fringe plane patterns onto the detection volume (12) and for focussing the backscattered radiation and fluorescent re-emissions from the detection volume onto the detection device (42), it would be a simple matter well within the level of skill of the average artisan to substitute other functionally equivalent means for projecting and/or focussing, such as a concave reflective surface of optical quality formed on the front of a suitably shaped support. In that case the window function of the window lens (40) could be satisfied by means of a suitable thickness of a transparent material, possibly provided with self-cleaning segments in which a stream of pressurized air from inside the aircraft is directed across the critical portions of the window's exterior.

The above-described arrangement has an advantageous self-aligning characteristic even if the window lens (40) is mounted independently of the other components, thereby permitting the transmit/receive lens to be rigidly flush-mounted in the skin of the airplane (10), while permitting the other components contained inside the aircraft (e.g., the laser (32), and the beam splitters/modulators (36, 38)) to be isolated from vibrations and/or to be conveniently removed and replaced for maintenance without disturbing the window and its associated seal.

It will be appreciated that it is preferable (on account of strength, cost, weight, ease of replacement, and other similar considerations) for the window to have a maximum diameter (or other equivalent effective aperture dimension) that is relatively small. In particular, it is essential that the distance that separates the detection volume from the window and the rest of the aircraft's surface be significantly greater than the thickness of the boundary layer formed at the surface of the aircraft. For most applications it is desirable that the distance separating the detection volume from the surface of the aircraft be at least 0.5 metres and preferably in excess of 1 metre. On the other hand, for most applications, the maximum practical window size is less than 0.5 meters. Thus, as a general rule, the effective window aperture dimension should be less than the distance between the window and the sample.

Referring now specifically to Fig. 7, it will be recalled that this Figure is a block diagram depicting schematically the flow of raw data through the various signal processing and conditioning subsystems. The photodetector (42) generates a raw data output signal (120) which corresponds to the variation in intensity of the backscattered light received from sample volume area (12) through the window lens (40) (Fig. 3). It will be recalled that each of the three acousto-optic cells (38) had its particular associated acoustic frequency which resulted in each of the three different sets of fringe planes having its own distinguishing modulation frequency that will be imparted to the scattered light as the fringe planes move relative to a "stationary" aerosol particle. Sinc the three modulating frequencies are selected such that a "moving" particle will still result in the scattered light being modulated at a frequency that still is contained within three frequency bands centered about the three modulation frequencies and since the three modulating frequencies are sufficiently separated from one another that the three associated frequency bands associated with the three sets of fringe planes to not overlap—at least for the range of particle velocities anticipated—it is thus possible to separate the raw output signal (120) (depicted as a single burst of frequencies), by means of three separate conventional band pass filters (122, 124, 126); the raw output signal may thus be divided into a low frequency component (128), a mid-frequency component (130) and a high frequency component (132), respectively corresponding to the fringe planes associated with first normal vector $N_a$, second normal vector $N_b$, and third normal vector $N_c$. These three signal components are input into three respective channels (134, 136, 138) of a conventional frequency analyzer (140) which processes successive such frequency burst components to derive a corresponding fundamental frequency from the background noise and to output a digital indication thereof to the digital data processor (142). This is indicated symbolically in the Figure by the provision of a first output (144) labelled $f_a$ from the first channel (134), a second output labelled $f_b$ (146) from the second channel (136), and a third output labelled $f_c$ (148) from the third channel (158).

Preferably, the frequency analyzer (140) is provided with an adaptive tracking capability whereby it concentrates its search for the desired fundamental frequency component about a known or predicted value thereof. This is indicated diagrammatically in the Figure by the provision of three digital signals from the data processor (142) to the frequency analyzer (140) labelled respectively $\hat{f}_a$ (150), $\hat{f}_b$ (152) and $\hat{f}_c$ (154). To derive these three predicted frequencies, the data processor (142) has the benefit of accelerometer data and rate-gyro data from the aircraft's guidance system. This is indicated symbolically in the Figure by the provision of a first set of inputs (156) respectively labelled $N_x$ (158), $N_y$ (160), and $N_z$ (162) which represent digital indications of acceleration in the aircraft's X, Y and Z axes, and by the provision of a second set of similar inputs (164) respectively labelled $R_x$ (166), $R_y$ (168) and $R_z$ (170) corresponding to digital representations of the aircraft's angular velocity about its X, Y and Z axes, respectively. It should be readily apparent, that given the magnitude and orientation of such accelerations and changes in attitude, it then becomes a relatively simple computation to estimate near term changes in the relative velocity between particles in the free airstream located at a particular orientation with respect to and at a particular distance from the aircraft's center of gravity and the resultant increase or decrease in the frequency with which such a particle will interrupt the successive fringes of each of the three sets of moving fringe patterns. In particular, such an estimation may make use of the mathematical technique known as the "Kalman Filter" whereby such frequency changes may be predicted with reasonable accuracy even when the frequency analyzer is unable to make an accurate measurement of the actual frequency because of a poor signal-to-noise ratio, sudden perturbations in the signal caused by fleeting gusts of wind and the like and by the failure of the photodetector (42) to output any meaningful signal for some interval of time as the result of the temporary absence of any suitable aerosol particles within the actual sample volume.

In any event, the data processor (142) produces three velocity output signals (which may be either analog or digital, or both), identified in the drawings by the symbol V (172), α (174) and β (176) respectively corresponding to true air speed, angle of attack and angle of side slip. As a result of the particular signal processing system design illustrated in the Drawings, the output of the data processor will effectively be a composite of data measured by the fringe velocimeter with data measured by conventional accelerometers and rate gyroscopes. However, it should be appreciated that by so combining directly measured data with predicted data, not only is the system able to overcome the adverse effects of what might otherwise be a poor signal-to-noise environment (especially when an aircraft is flying at very high altitudes and/or a relatively low-powered laser is being utilized to measure velocity of particles at a relatively great distance), but also the cumulative integration errors inherent in an accelerometer-based system are minimized.

Still referring to Fig. 7, it will be noted that a data switch (180) is located in a signal path between the photodetector (42) and the three band pass filters (122, 124, 126). A timer (182) provides a timing signal to switch the laser (32) On and Off (as described previously with reference to Fig. 6); at the same time it also controls the data switch (180). Thus, when the laser (32) is switched On and the interference fringes are present in the sample volume (12), the sample output by the photodetector (42) is coupled through the switch (180) to the three band pass filters (122, 124, 126) as aforesaid. On the other hand, when the laser (32) is switched Off, then the switch (180) couples the output of the photodetector (42) to an analog to digital (A/D) converter circuit (184) which digitizes the exponentially decayed signal (186) then being output from the photodetector (42) as the result of the exponential decay of the intensity of the fluorescent re-emissions at discrete time intervals $t_i$, which is accordingly input to the data processor (142) in digital form. The data processor (142) is also provided with a digital temperature signal $T_t$ (188). From these two inputs and also from the air speed measurement V (172), the data processor (142) is thus able to derive a digital signal $P_s$ (190) representing the pressure altitude of the aircraft in accordance with the physical equations discussed previously with reference to Fig. 1.

Reference should now be made to Figs. 8 and 9 which, it will be recalled, show alternative embodiments generally similar to that of Fig. 3 but employing more than one radiation source and/or more than one photodetector. Accordingly, components generally similar in construction and function to specific components of the Fig. 3 embodiment will bear the same reference numbers with the addition of a "prime" symbol ('). Where components that are somewhat analogous to components shown in the Fig. 3 embodiment have been replaced with several components, then double prime (") and triple prime ('''), etc. symbols will also be employed.

Referring now specifically to the embodiment of Fig. 8, it will be seen that two separate laser radiation sources are provided. A primary laser source (32') provides the radiation that forms the moving interference fringe planes utilized to make the velocity measurements associated with the velocimeter subsystem. Thus, the laser (32') should preferably be of a type that may be continuously operated and provides a well-collimated beam of coherent light of a sufficiently short wavelength relative to the diameter of a typical atmospheric aerosol particle that a substantial backscattering will occur as the aerosol particles that naturally occur in the atmosphere pass through the interference fringe planes created in the sample region (12) by the velocimeter subsystem. There is also provided a second radiation source (32'') that functions as the radiation source for the altimeter subsystem. Thus, the spectral content of the second laser (32'') should preferably be such as to cause a measurable degree of fluorescence of particular air molecules within the sample region (12) at the altitudes and pressures for which the system will be utilized.

A dichroic mirror (200) is utilized to combine the output beam (34') from the first laser (32') with the output beam (34'') of the second laser (32'') to form a combined output beam (34''') that is functionally analogous to the output beam (34) of the Fig. 3 embodiment, except that its spectral and coherency characteristics will be a combination of the respective characteristics of the two input beams (34', 34''). Combined beam (34''') is divided into three beams (44', 46', 48') by the beam splitter (36'), these three beams being oriented at approximately 120° intervals about the central axis (50'). These three beams are then modulated into three diverging beam pairs (64', 66', 68') by the acousto-optic modulator assembly (38') and are focussed by the front element (70') of the window lens (40') into three converging beam pairs (74', 76', 78') that each have their point of intersection centered within the sample region (12) to thereby form interference fringe planes as described previously with reference to the Fig. 3 embodiment. Since the three converging beams (74', 76', 78') also contain radiant energy originating from the second laser (32'), accordingly, the particular air molecules in the sample region (12) that are sensitive to the radiation (34'') from the second laser (32'') will fluoresce.

Both elements of window lens (40'), namely, the front element (70') and rear element (72'), serve as the primary components of the receiving optics, whereby not only the backscattered radiation from the aerosol particles as they pass through the interference fringes but also the fluorescent re-emissions from the particular air molecules excited by the radiant energy from the second laser (32') are focussed both onto a first photodetector (42') and onto a second photodetector (42''). A second dichroic mirror (202) separates the received energy (204) into a first component (206) that has been backscattered from the aerosol molecules and a second component (208) that is associated with the fluorescent re-emissions from individual air molecules with the first component (206) being directed toward the first photodetector (42') and the second component being directed to the second photodetector (42'').

It should be understood that such a form of construction employing a dichroic mirror (202) in the path of the received radiation is operable only if there is a significant difference in spectral content between the above-described components of received radiation (206, 208). Otherwise, the single photodetector arrangement (42) of the Fig. 3 embodiment may be employed.

Alternatively, as discussed above with reference to Fig. 3, in the event that a single laser radiation source (32) results in two distinct types of received radiation differing substantially in their respective spectral content, then by means of a suitable beam splitter (such as dichroic mirror (202) of the Fig. 8 embodiment), two individual photodetectors may be employed, each sensitive to only one type of radiation.

Reference should now be made to Fig. 9 which shows yet another possible embodiment of the optical components utilized to focus the radiation received from the sample volume (12) onto two photodetectors (42''', 42''''). It should be noted that this particular embodiment does not employ three separate beam pairs such as were shown in the embodiments of Figs. 3 and 8 but rather three separate modulated output beams (52', 54', 56') and a single central unmodulated beam (58'). Such an alternative form of construction is but one example of a number of different optical arrangements utilizing refracting and/or reflecting optical elements that may be utilized to transmit and focus laser radiation onto a sample volume and to gather and receive the resultant radiation from the sample volume and focus it onto the photodetector or other radiation measurement device.

Particularly convenient from the perspective of the present invention is the provision of an auxiliary focussing element in the optical receiving subsystem, namely, a convex reflector (202") that is tilted with respect to the central axis of the optics (50"), so as to permit the use of two off-axis detectors (42''', 42''''), with the two radiation components (206', 208') that are focussed onto the two photodetectors (42''', 42'''') being separated by a dichroic mirror (202''').

It will also be appreciated that the laser velocimeter subsystem and the fluorescent altimeter subsystem may each have utility apart from the other. In that case, the energy source within the velocimeter subsystem would not need to be switched on and off but could be operated continuously. Furthermore, other energy sources could be used in place of the laser within the altimeter subsystem, in particular, fluorescent emissions may be generated in response to radio-frequency electromagnetic radiation (or soft x-rays) directed away from the aircraft skin with the radiant energy preferably being oriented cylindrically about a propagation axis so that it does not significantly fall off in intensity in the vicinity of the sample volume. Furthermore, the optical axis of the detector subsystem could cross the radiant energy propagation axis at the sample volume, thereby effectively confining the sample volume to the intersection in three-dimensional space of the detector's effective field of view with the radiant energy beam.

The apparatus constructed in accordance with the teachings of the present invention may be utilized in many different types of instrumentation systems, such as provided for use aboard an aircraft, in which case air flight data measurements of variables such as air density, altitude, air speed, angle of attack and side slip angle may be made with enhanced accuracy and reliability. Furthermore, it may find separate utility in aircraft instrumentation systems provided with a conventional altimeter.

## Claims

1. An apparatus for measuring the three-dimensional velocity of a remotely located object, comprising: first means (32, 32', 32''') emitting radiation; second means (40) associated with said first means (32, 32', 32''') for projecting said radiation onto a detection volume (12) physically separated in space from said apparatus for producing simultaneously in said detection volume three sets of non-orthogonal, but linearly independent, three-dimensional patterns of radiation, each of said sets having its own distinguishing characteristic and each of said sets having a normal vector which has a significant component in the direction of the main axis of the apparatus as well as a transverse component at right angles thereto, third means (40) associated with said second means (40) for focussing radiation backscattered by said object as it passes through said detection volume (12) onto a detection area contained with said apparatus; fourth means (42, 42', 42''') disposed to measure the intensity of said scattered radiation; fifth means (122, 124, 126) responsive to the output of said fourth means (42, 42', 42''') and capable of utilizing said distinguishable characteristic for identifying three separate components of said scattered radiation associated respectively with each of said three sets of radiation patterns; and sixth means (140, 142) responsive to the output of said fifth means (120, 124, 126) for calculating the velocity of said object relative to said apparatus, at least said first, second, third and fourth means are located in physical proximity to one another, whereby they may all be contained within a single, relatively compact, housing, aboard a moving body, whereby the velocity measured is the velocity of the moving body relative to said object.

2. An apparatus as claimed in Claim 1, wherein said three sets of three dimensional patterns of radiation actually overlap one another such that radiation scattered from a single particle in said detection volume (12) may contain components originating from each one of said three sets.

3. An apparatus as claimed in Claim 1, wherein said three sets of three-dimensional patterns of radiation are spatially separated from one another within said detection volume (12) and said distinguishing characteristic associated with at least one of said sets of patterns of radiations in spatial relationship.

4. An apparatus as claimed in any preceding Claim, wherein said distinguishing characteristic associated with at least one of said sets of patterns of radiation is the wavelength of the radiation and wherein said fifth means (122, 124, 126) comprises a filter means sensitive to said wavelength.

5. An apparatus as claimed in any preceding Claim, wherein each of said three-dimensional patterns of radiation is a set of fringe planes each oriented generally perpendicularly with respect to a fringe plane normal vector (92), each of said sets of fringe planes being formed in the volume defined by the intersection of two distinct beams of radiation (80, 82; 84, 86; 88, 90) and having a corresponding normal vector generally coplanar with said two intersecting beams and generally perpendicular to the bisector of their angle of their intersection.

6. An apparatus as claimed in Claim 5 further comprising: means (38, 38', 38") for modulating one of said beams (82, 86, 90) with respect to a second one of said beams (80, 84, 88) such that the corresponding one of said fringe plane patterns formed by those two beams within said detection volume will have an apparent relative velocity with respect to said apparatus determined by the nature and extent of the modulation.

7. An apparatus as claimed in Claim 6, wherein said apparatus is mounted aboard an aircraft (10) and wherein the apparent velocity of said fringe planes caused by said modulation is significantly in excess of the velocity of said aircraft relative to the air through which it flies, whereby the relative velocity of said aircraft (10) with respect to said airstream will cause an apparent shift in said modulation frequency from which said relative velocity component may be calculated.

8. An apparatus as claimed in any one of Claims 5 to 7, wherein said beams are beams of laser radiation.

9. An apparatus as claimed in Claim 8 further comprising: means (36, 36', 36") for splitting a single beam of laser light (34, 34') into a beam pair (64, 74; 66, 76; 68, 78).

10. An apparatus as claimed in Claim 9, wherein said modulating means (38, 38', 38") comprises an acousto-optic modulating means driven at a predetermined frequency such that when the two beams comprised in said beam pair (64, 74; 66, 76; 68, 78) intersect, the fringe plane patterns formed thereby will move in a direction generally normal to the planes of said fringes with a velocity related to said predetermined frequency, thereby modulating the one of said three separate velocity components associated with the corresponding one of said three fringe planes with a characteristic frequency related to said predetermined frequency, whereby said particular component can be distinguished from the other two components of said three separate components.

11. An apparatus as claimed in any one of Claims 1 to 3 wherein said distinguishing characteristic associated with at least one of said sets of patterns of radiation, is the rate which an object that is stationary relative to said apparatus will intersect successive bright regions within a corresponding one of said three-dimensional patterns of radiation, thereby modulating the radiation backscattered by an object from said corresponding pattern of radiation with a frequency related to said rate and also related to a relative velocity component of the object.

12. An apparatus as claimed in any preceding claim, wherein said second means and said third means comprise a common optical element (40) that is operative both in the path of said radiation projected by said second means onto said detection volume (12) and in the path of the radiation from said detection volume (12) that is focussed by said third means (40).

13. An apparatus as claimed in Claim 12, wherein said common optical element is a lens (70, 72; 70', 72').

14. An apparatus as claimed in Claim 12, wherein said common optical element is a concave mirror.

15. An apparatus as claimed in any one of claims 12 to 14 wherein said common optical element is a window mounted in a surface through which window is transmitted radiation originating with said first means (32, 32', 32''') contained inside said apparatus to said detection volume (12) outside said apparatus and through which also is received backscattered radiation from said detection volume (12), said window having an effective aperture dimension significantly less than the distance separating said detection volume (12) from said window.

16. An apparatus as claimed in Claim 15, wherein said window (40) has a maximum transverse dimension of 0.5 metre and wherein said distance separating said detection volume (12) from said window is in excess of 1 metre.

17. An apparatus as claimed in any preceding Claim, wherein said object is an aerosol particle suspended in air at said detection volume (12).

18. An apparatus as claimed in any preceding Claim, including an accelerometer subsystem (156, 164) comprising: means for measuring changes in angular velocity of said aircraft, means for converting said changes in measured angular velocity into a correction factory relating the translational three-dimensional velocity of said apparatus with respect to the center of gravity of said aircraft, and means for applying said correction factory to the measured velocity of said object relative to said aircraft.

**Patentansprüche**

1. Vorrichtung zum Messen der dreidimensionalen Geschwindigkeit eines entfernt liegenden Objekts, die aufweist: eine erste Einrichtung (32, 32', 32'''), die eine Strahlung emittiert, eine zweite Einrichtung (40), die der ersten Einrichtung (32, 32', 32''') zugeordnet ist und die Strahlung auf einen Detektionsvolumenraum (12) projiziert, der physikalisch im Raum von der Vorrichtung getrennt ist, um gleichzeitig im Detektionsvolumenraum drei Sätze von nicht-orthogonalen, aber linear unabhängigen, drei-dimensionalen Strahlungsmustern zu erzeugen, wobei jeder Satz seine eigene Unterscheidungscharakteristik hat, und jeder Satz einen normalen Vektor hat, der eine signifikante Komponente in Richtung der Hauptachse der Vorrichtung sowie eine Querkomponente rechtwinklig hierzu hat, eine dritte Einrichtung (40), die der zweiten Einrichtung (40) zugeordnet ist, welche die vom Objekt zurückgestreute Strahlung beim Durchgang durch den Detektionsvolumenraum (12) auf ëinen in der Vorrichtung enthaltenen Detektionsbereich fokussiert, eine vierte Einrichtung (42, 42', 42'''), die angeordnet ist, um die Intensität der gestreuten Strahlung zu messen, eine fünfte Einrichtung (122, 124, 126), die auf den Ausgang der vierten Einrichtung (42, 42', 42''') anspricht und die fähig ist, die Unterscheidungscharakteristik zur Identifizierung von drei gesonderten Komponenten der gestreuten Strahlung auszunutzen, die jeweils den jeweiligen drei Sätzen der Strahlungsmuster zugeordnet sind, und eine sechste Einrichtung (140, 142), die auf den Ausgang der fünften Einrichtung (120, 124, 126) zum Ermitteln der Geschwindigkeit des Objekts relativ zu der Vorrichtung anspricht, wobei wenigstens die erste, zweite, dritte und vierte Einrichtung in physikalischer Nähe zueinander liegen, und wobei sie alle in einem einzigen, relativ kompakten Gehäuse an Bord eines sich bewegenden Körpers enthalten sein können, und wobei die gemessene Geschwindigkeit die Geschwindigkeit des sich bewegenden Körpers relativ zum Objekt ist.

2. Vorrichtung nach Anspruch 1, bei der die drei Sätze von drei-dimensionalen Mustern der Strahlung in Wirklichkeit einander derart überlappen, daß die von einem einzigen Partikel im Detektionsvolumenraum (12) gestreute Strahlung Komponenten enthalten kann, die von jedem dieser drei Sätze ausgehen kann.

3. Vorrichtung nach Anspruch 1, bei der die drei Sätze von drei-dimensionalen Mustern der Strahlung räumlich voneinander in dem Detektionsvolumenraum (12) getrennt sind, und bei der die Unterscheidungscharakteristik, die wenigstens einem dieser Sätze von Strahlungsmustern zugeordnet ist, von einem räumlichen Zusammenhang gebildet wird.

4. Vorrichtung nach einem der vorangehenden Ansprüche, bei der die Unterscheidungscharakteristik, die wenigstens einem der Sätze von Strahlungsmustern zugeordnet ist, die Wellenlänge der Strahlung ist, und bei der die fünfte Einrichtung (122, 124, 126) eine für die Wellenlänge empfindliche Filtereinrichtung aufweist.

5. Vorrichtung nach einem der vorangehenden Ansprüche, bei der jedes der drei-dimensionalen Strahlungsmuster ein Satz von Randebenen ist, die jeweils im allgemeinen senkrecht bezüglich eines Randebenen-Normalenvektors (92) ausgerichtet sind, bei der jeder Satz von in dem Volumenraum gebildeten Randebenen durch den Schnitt von zwei unterschiedlichen Strahlen der Strahlung (80, 82; 84, 86; 88, 90) definiert ist und einen entsprechenden normalen Vektor hat, der im allgemeinen koplanar zu den beiden sich schneidenden Strahlen und im allgemeinen senkrecht zu der Halbierenden ihres Schnittwinkels ist.

6. Vorrichtung nach Anspruch 5, die ferner aufweist: eine Einrichtung (38, 38', 38'') zum Modulieren einer der Strahlen (82, 86, 90) bezüglich eines zweiten Strahls dieser Strahlen (80, 84, 88) derart, daß das eine entsprechende Randebenenmuster, das von jenen beiden Strahlen in dem Detektionsvolumenraum gebildet wird, eine scheinbare relative Geschwindigkeit bezüglich der Vorrichtung hat, die durch die Eigenheit und das Ausmaß der Modulation bestimmt wird.

7. Vorrichtung nach Anspruch 6, bei der die Vorrichtung an Bord eines Luftfahrtzeuges (10) vorgesehen ist, und bei der die scheinbare Geschwindigkeit der Randebenen, die durch die Modulation bewirkt wird, beträchtlich größer als die Geschwindigkeit des Luftfahrzeugs relativ zur Luft ist, in des es fliegt, wobei die Relativgeschwindigkeit des Luftfahrzeugs (10) bezüglich des Luftstromes eine scheinbare Verschiebung der Modulationsfrequenz bewirkt, aus der die relative Geschwindigkeitskomponente ermittelt werden kann.

8. Vorrichtung nach einem der Ansprüche 5 bis 7, bei der die Strahlen Laserstrahlen sind.

9. Vorrichtung nach Ansrpuch 8, die ferner aufweist: eine Einrichtung (36, 36', 36'') zum Brechen eines einzigen Strahls des Laserlichts (34, 34') zu einem Strahlenpaar (64, 74; 66, 76; 68, 78).

10. Vorrichtung nach Anspruch 9, bei der die Modulationseinrichtung (38, 38', 38'') eine akustooptische Modulationseinrichtung aufweist, die bei einer vorbestimmten Frequenz derart arbeitet, daß, wenn die beiden Strahlen in dem Strahlenpaar (64, 74; 66, 76; 68, 78) einander schneiden, die sich hierbei gebildeten Randebenenmuster sich in einer Richtung im allgemeinen senkrecht zu den Randebenen mit einer der vorbestimmten Frequenz zugeordneten Geschwindigkeit bewegen, wodurch eine der drei gesonderten Geschwindigkeitskomponenten, die einer der entsprechenden drei Randebenen zugeordnet ist, mit einer charakteristischen Frequenz moduliert wird, die der vorbestimmten Frequenz zugeordnet ist, wobei die spezielle Komponente sich von den anderen beiden Komponenten der drei gesonderten Komponenten unterscheiden kann.

11. Vorrichtung nach einem der Ansprüche 1 bis 3, bei der die Unterscheidungscharakteristik, die wenigstens einem der Sätze von Strahlungsmustern zugeordnet ist, die Rate ist, mit der ein Objekt, das relativ zur Vorrichtung stationär ist, aufeinanderfolgende helle Bereiche in einem entsprechenden Strahlungsmuster der dreidimensionalen Strahlungsmuster schneidet, wodurch die von dem Objekt rückwärts gestreute Strahlung ausgehend von dem entsprechenden Strahlungsmuster mit einer Frequenz moduliert wird, die dieser Rate zugeordnet ist und die auch der relativen Geschwindigkeitskomponente des Objekts zugeordnet ist.

12. Vorrichtung nach einem der vorangehenden Ansprüche, bei der die zweite Einrichtung und die dritte Einrichtung ein gemeinsames optisches Element (40) aufweisen, das arbeitsmäßig sowohl in dem Strahlengang, der durch die zweite Einrichtung auf den Detektionsvolumenraum (12) projiziert wird, als auch in dem Strahlengang von dem Detektionsvolumenraum (12) angeordnet ist, welcher durch die dritte Einrichtung (40) fokussiert wird.

13. Vorrichtung nach Anspruch 12, bei der das gemeinsame optische Element eine Linse (70, 72; 70', 72') ist.

14. Vorrichtung nach Anspruch 12, bei der das gemeinsame optische Element ein konkaver Spiegel ist.

15. Vorrichtung nach einem der Ansprüche 12 bis 14, bei der das gemeinsame optische Element ein Fenster ist, das in einer Fläche vorgesehen ist, wobei durch das Fenster die Strahlung, die von der ersten Einrichtung (32, 32', 32'''), die im Innern der Vorrichtung enthalten ist, ausgeht, zu dem Detektionsvolumenraum (12) außerhalb der Vorrichtung übertragen wird, und durch das auch die rückwärts gestreute Strahlung von dem Detektionsvolumenraum (12) empfangen wird, wobei das Fenster eine effektive Öffnungsabmessung hat, die beträchtlich kleiner als der Abstand ist, der den Detektionsvolumenraum (12) von dem Fenster trennt.

16. Vorrichtung nach Anspruch 15, bei der das Fenster (40) eine maximale Querabmessung von 0,5 Meter hat, und bei der der Abstand, der den Detektionsvolumenrand (12) vom Fenster trennt, größer als 1 Meter ist.

17. Vorrichtung nach einem der vorangehenden Ansprüche, bei der das Objekt ein Aerosolpartikel ist, das in der Luft am Detektionsvolumenraum (12) suspendiert ist.

18. Vorrichtung nach einem der vorangehenden Ansprüche, die ein Beschleunigungsmeß-Untersystem (156, 164) enthält, welches aufewist: eine Einrichtung zum Messen der Änderungen der Winkelgeschwindigkeit des Luftfahrzeugs, eine Einrichtung zum Umwandeln der Änderungen der gemessenen Winkelgeschwindigkeit in einen Korrekturfaktor bezüglich der dreidimensionalen Fortschreitungsgeschwindigkeit der Vorrichtung bezogen auf den Schwerkraftsmittelpunkt des Luftfahrzeuges, und eine Einrichtung zum Anlegen des Korrekturfaktors an die gemessene Geschwindigkeit des Objekts relativ zum Luftfahrzeug.

**Revendications**

1. Un appareil pour mesurer la vitesse tridimensionnelle d'un objet situé à distance, comprenant: des premiers moyens (32, 32', 32''') émettant un rayonnement; des seconds moyens (40) associés aux premiers moyens (32, 32', 32''') destinés à projeter ce rayonnement dans un volume de détection (12), physiquement séparé de l'appareil, dans l'espace, pour produire simultanément dans le volume de détection trois ensembles de configurations de rayonnement tridimensionnelles, non orthogonales, mais linéairement indépendantes, chacun de ces ensembles ayant sa propre caractéristique distinctive, et chacun de ces ensembles ayant un vecteur normal qui comporte une composante notable dans la direction de l'axe principal de l'appareil, ainsi qu'une composante transversale qui lui est perpendiculaire, des troisièmes moyens (40) associés aux seconds moyens (40) pour focaliser dans une zone de détection contenue dans l'appareil le rayonnement rétrodiffusé par l'objet, lorsqu'il traverse le volume de détection (12); des quatrièmes moyens (42, 42', 42''') disposés de façon à mesurer l'intensité du rayonnement diffusé; des cinquièmes moyens (122, 124, 126) qui réagissent à l'information de sortie des quatrièmes moyens (42, 42', 42''') et qui sont capables d'utiliser la caractéristique distinctive pour dientifier trois composantes séparées du rayonnement diffusé, qui sont respectivement associées à chacun des trois ensembles de configurations de rayonnement; et des sixièmes moyens (140, 142) qui réagissent à l'information de sortie des cinquièmes moyens (120, 124, 126) en calculant la vitesse de l'objet par rapport à l'appareil, les premiers, seconds, troisièmes et quatrièmes moyens, au moins, se trouvant à proximité physique l'un de l'autre, grâce à quoi ils peuvent tous être contenus à l'intérieur d'une seule enceinte, de dimensions relativement faibles, embarquée dans un corps mobile, grâce à quoi la vitesse mesurée est la vitesse du corps mobile par rapport à l'objet précité.

2. Un appareil selon la revendication 1, dans lequel les trois ensembles de configurations de rayonnement tridimensionnelles sont effectivement en chevauchement mutuel, de façon que le rayonnement qui est diffusé à partir d'une seule particule dans le volume de détection (12) puisse contenir des composantes qui proviennent de chacun des trois ensembles.

3. Un appareil selon la revendication 1, dans lequel les trois ensembles de configurations de rayonnement tridimensionnelles sont spatialement séparées l'une de l'autre à l'intérieur du volume de détection (12), et la caractéristique distinctive associée à l'un au moins des ensembles de configurations de rayonnement est une relation spatiale.

4. Un appareil selon l'une quelconque des revendications précédentes, dans lequel la caractéristique distinctive qui est associée à l'un au moins des ensembles de configurations de rayonnement est la longueur d'onde du rayonnement, et dans lequel les cinquièmes moyens (122, 124, 126) comprennent des moyens de filtrage sensibles à cette longueur d'onde.

5. Un appareil selon l'une quelconque des revendications précédentes, dans lequel chacune des configurations de rayonnement tridimensionnelles est un ensemble de plans de franges, chacun d'eux étant orienté de façon générale perpendiculairement à un vecteur normal de plan de franges (92), chacun des ensembles de plans de franges étant formé dans le volume défini par l'intersection de deux faisceaux de rayonnement distincts (80, 82; 84, 86; 88, 90), et ayant un vecteur normal correspondant qui est de façon générale coplanaire par rapport aux deux faisceaux qui se coupent, et est de façon générale perpendiculaire à la bissectrice de leur angle d'intersection.

6. Un appareil selon la revendication 5, comprenant en outre: des moyens (38, 38', 38") pour moduler l'un des faisceaux (82, 86, 90) par rapport à un second faisceau (80, 84, 88), de façon que la configuration correspondante parmi les configurations de plans de franges que ces deux faisceaux forment à l'intérieur du volume de détection, ait une vitesse relative apparente par rapport à l'appareil qui soit déterminée par la nature et la valeur de la modulation.

7. Un appareil selon la revendication 6, monté à bord d'un aéronef (10), dans lequel la vitesse apparente des plans de franges qui résulte de la modulation est notablement supérieure à la vitesse de l'aéronef par rapport à l'air dans lequel il vole, grâce à quoi la vitesse relative de l'aéronef (10) par rapport à l'écoulement d'air provoque un décalage apparent de la fréquence de modulation, à partir duquel on peut calculer la composante de vitesse relative.

8. Un appareil selon l'une quelconque des revendications 5 à 7, dans lequel les faisceaux sont des faisceaux de rayonnement laser.

9. Un appareil selon la revendication 8, comprenant en outre: des moyens (36, 36', 36") pour diviser un seul faisceau de lumière laser (34, 34') en une paire de faisceaux (64, 74; 66, 76; 68, 78).

10. Un appareil selon la revendication 9, dans lequel les moyens de modulation (38, 38', 38") comprennent des moyens de modulation acousto-optiques qui sont excités à une fréquence prédéterminée, de façon que lorsque les deux faisceaux appartenant à la paire de faisceaux (64, 74; 66, 76; 68, 78) se coupent, les configurations de plans de franges que ces faisceaux forment se déplacent dans une direction qui est de façon générale normale aux plans des franges, avec une vitesse liée à la fréquence prédéterminée, ce qui a pour effet de moduler celle des trois composantes de vitesse séparées qui est associée au plan correspondant parmi les trois plans de franges, avec une fréquence caractéristique qui est liée à la fréquence prédéterminée, grâce à quoi cette composante particulière peut être distinguée des deux autres composantes parmi les trois composantes séparées.

11. Un appareil selon l'une quelconque des revendications 1 à 3, dans lequel la caractéristique distinctive qui est associé à l'un au moins des ensembles de configurations de rayonnement es le rythme avec lequel un objet qui est fixe par rapport à l'appareil rencontre des régions lumineuses successives dans l'une correspondante des configurations de rayonnement tridimensionnelles, ce qui a pour effet de moduler le rayonnement rétrodiffusé par un objet à partir de la configuration de rayonnement correspondante, avec une fréquence qui est liée au rythme précité, et qui est également liée à une composante de vitesse relative de l'objet.

12. Un appareil selon l'une quelconque des revendications précédentes, dans lequel les seconds moyens et les troisièmes moyens comprennent un élément optique commun (40) qui travaille à la fois dans le chemin du rayonnement que les seconds moyens projettent dans le volume de détection (12), et dans le chemin du rayonnement provenant du volume de détection (12), qui est focalisé par les troisièmes moyens (40).

13. Un appareil selon la revendication 12, dans lequel l'élément optique commun est une lentille (70, 72; 70', 72').

14. Un appareil selon la revendication 12, dans lequel l'élément optique commun est un miroir concave.

15. Un appareil selon l'une quelconque des revendications 12 à 14, dans lequel l'élément optique commun est une fenêtre montée dans une surface, et à travers laquelle est transmis un rayonnement qui provient des premiers moyens (32, 32', 32''') contenus à l'intérieur de l'appareil, et dirigé vers le volume de détection (12) à l'extérieur de l'appareil, et à travers laquelle est également reçu un rayonnement rétrodiffusé à partir du volume de détection (12), cette fenêtre ayant une ouverture effective qui est notablement inférieure à la distance qui sépare le volume de détection (12) de la fenêtre.

16. Un appareil selon la revendication 15, dans lequel la fenêtre (40) a une dimension transversale maximale de 0,5 mètre, et dans lequel la distance qui sépare le volume de détection (12) de la fenêtre, est supérieur à 1 mètre.

17. Un appareil selon l'une quelconque des revendications précédentes, dans lequel l'objet est une particule d'aérosol en suspension dans l'air, dans le volume de détection (12).

18. Un appareil selon l'une quelconque des revendications précédentes, comprenant un sous-système d'accéléromètre (156, 164) qui comporte: des moyens pour mesurer des changements de vitesse angulaire de l'aéronef, des moyens pour convertir ces changements de vitesse angulaire mesurée en un facteur de correction concernant la vitesse tridimensionnelle de translation de l'appareil par rapport au centre de gravité de l'aéronef, et des moyens pour appliquer le facteur de correction à la vitesse mesurée de l'objet par rapport à l'aéronef.

## FIG. 6

110

112

20msec

10μsec

time

## FIG. 9

92

100

108

98

106

S

## FIG. 5

I(t)

L

94

96

102

104

t

LASER — 32

TIMER — 182

PHOTO DETECT. — 42

DATA SWITCH

180

122 — BAND PASS FILTER

128

124 — BAND PASS FILTER

130

126 — BAND PASS FILTER

132

120

FREQUENCY ANALYZER

CHANNEL #1 134

CHANNEL #2 136

CHANNEL #3 138

140

$f_A$ 144

$\hat{f}_A$ 150

$f_B$ 146

$\hat{f}_B$ 152

$f_C$ 148

$\hat{f}_C$ 154

$P_s$ 190

$T_t$ 188

DIGITAL DATA PROC. 142

158 — $N_x$

160 — $N_y$

156

162 — $N_z$

166 — $R_x$

168 — $R_y$

164

170 — $R_z$

172 — V

174 — $\alpha$

176 — $\beta$

186

184 — A/D CONVERTER

$I(t_i)$

FIG. 7

FIG. 8

FIG. 9